# EUROPÄISCHE PATENTSCHRIFT

(11) **EP 0 799 574 B1**
(45) Veröffentlichungstag und Bekanntmachung des Hinweises auf die Patenterteilung: **13.06.2001**
(21) Anmeldenummer: 97103763.5
(22) Anmeldetag: 06.03.1997
(51) Int. Cl.: A23G 1/18, A23G 1/04, A23G 1/02

(54) **Verfahren zur kontinuierlichen Veredelung insbesondere von Kakaomassen**
Continuous refinement process particularly for cacao masses
Procédé d'affinage continu notamment des masses de cacao

(30) Priorität: 01.04.1996 DE 19612957
(43) Veröffentlichungstag der Anmeldung: 08.10.1997
(73) Patentinhaber: F.B. LEHMANN Maschinenfabrik GmbH, D-73431 Aalen (DE)
(72) Erfinder: Hentschel, Walter, 73431 Aalen (DE); Schmid, Helmut, Dipl.-Ing., 73431 Aalen (DE)
(74) Vertreter: Kern, Wolfgang, Dipl.-Ing.

(56) Entgegenhaltungen:
- EP-A- 0 063 163
- US-A- 4 667 590
- US-A- 4 746 529

## Beschreibung

Die Erfindung betrifft ein Verfahren zur kontinuierlichen Veredelung insbesondere von Kakaomassen, gemäß dem Oberbegriff des Anspruchs 1.

Bei einem bekannten Verfahren dieser Art (EP 0 063 163) wird die Kakaomasse kontinuierlich in dünner Schicht bei Temperaturen unter 100 °C entsäuert, teilentfeuchtet und entgast und nach einer Zwischenphase die gekühlte Masse kontinuierlich in dünner Schicht einer Restentfeuchtung und Restentgasung unterworfen und zur Weiterverarbeitung abgefördert. In der sogenannten Zwischenphase wird die Kakaomasse gestaut, um durch innere Reibung eine Wärmemenge zu erzeugen, auf Grund derer sich die Temperatur der Masse auf einen Wert von über 100 °C bis ca. 150 °C erhöht, d.h. die Entkeimungstemperatur erreicht wird, wonach die Masse aus dem Stauraum abgeführt und auf 100 °C abgekühlt wird. Als Staugefäß dient ein Gehäuse mit einem Rotor, dessen Außenumfang zur Gehäuseinnenwand einen zylindrischen Stauspalt bildet.

Diese Art der Entkeimung der Kakaomasse erfordert eine empfindliche Temperatursteuerung durch äußere Wärmezu- und -abfuhr, um die Entkeimungstemperatur nicht nur zu erreichen, sondern auch eine gewisse Zeitspanne aufrecht zu erhalten, da die Temperaturerhöhung durch Erzeugung einer inneren Reibung in der aufgestauten Masse von einer Vielzahl von Parametern abhängig ist, deren Zusammenwirken nicht in der Weise steuerbar ist, daß die innere Produktreibung im Staumassenreaktor zu Erwärmungen führt, die als im wesentlichen gleich intensiv und homogen anzusehen sind. Dies ist unter anderem darauf zurückzuführen, daß die Disipationselemente am Rotorumfang der bekannten Einrichtung bei den relativ hohen Drehzahlen von ca. 800 upm die im Rotorspalt befindliche Masse nicht mehr gleichmäßig behandeln können, sondern mehr oder weniger zufällig umwälzen und vermischen. Es kann dabei zu das Produkt schädigenden Überhitzungen kommen, bei denen die optimale Entkeimungstemperatur weit überschritten wird.

Die Aufgabe der Erfindung besteht deshalb darin, das Verfahren der genannten Art so weiter zu entwickeln, daß auf eine Temperaturerhöhung der zu behandelnden Kakaomasse zum Zwecke ihrer Entkeimung durch innere Reibung vollständig verzichtet werden kann und in der Entkeimungsstation bzw. Sterilisatoreinrichtung die Wärmemenge, die der Kakaomasse zwecks Entkeimung zugeführt wird, in Abhängigkeit vom Massendurchsatz genauestens bestimmbar und steuerbar ist.

Auf diese Weise wird die Gesamtkeimzahl der Kakaomasse nicht nur mit einem erheblich geringeren verfahrens- und apparatetechnischen Aufwand auf das gewünschte Maß gesenkt, nämlich beispielsweise durchschnittlich von ca. 10⁶ Keimen/g auf ca. 10² Keimen/g, sondern die Kakaomasse wird bei dieser Art der Entkeimung, die apparatetechnisch dadurch gekennzeichnet ist, daß sich relativ langsam bewegende Schabmesser die Masse von der inneren Oberfläche des oder der Gehäuse der Sterilisatoreinrichtung abschaben, um sie quer zum in Gehäuselängsrichtung erfolgenden Förderstrom zu durchmischen, wodurch auch eine wesentlich schonendere Behandlung erreicht wird.

Vorteilhafte Ausgestaltungen des Verfahrens sind in den Unteransprüchen gekennzeichnet.

Die Erfindung wird nachfolgend an Hand des in der Zeichnung dargestellten Ausführungsbeispiels näher erläutert. In der Zeichnung zeigen:
- Fig. 1: ein Ablaufschema des Verfahrens in Form eines Fließbildes,
- Fig. 2: eine schematische Längsschnittansicht eines Sterilisators und
- Fig. 3: eine vergrößerte Querschnittsansicht des Sterilisators von Fig. 2.

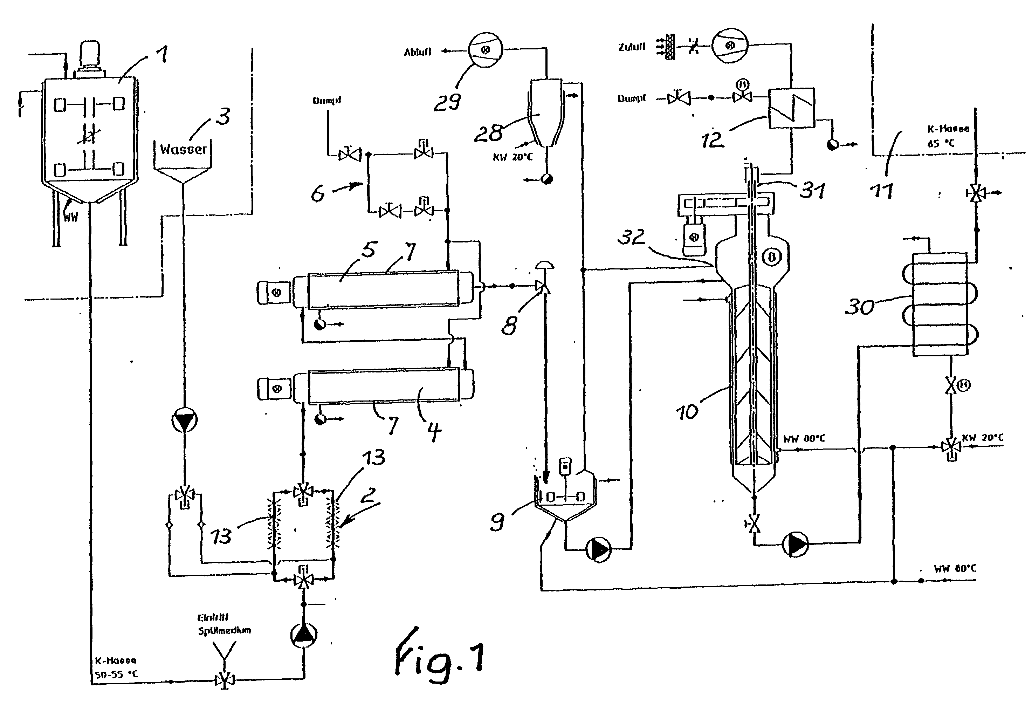

Gemäß dem in Fig. 1 dargestellten Fließbild wird die zu behandelnde Kakaomasse in Form eines fein zerkleinerten Produkts aus dem Rührwerksbehälter 1 bei einer Temperatur zwischen 50 und 55 °C in zwei statische Mischer 2 gefördert, in denen sie über Düsen 13 mit aufbereitetem Wasser geimpft wird, das aus dem Behälter 3 zudosiert wird.. Die so aufbereitete Kakaomasse wird durch eine Exzenterschneckenpumpe in einen ersten Sterilisator 4 gefördert, in dem der Entkeimungsvorgang stattfindet und der von einem Heizmantel 7 umgeben ist. Von dort aus wird das teilweise entkeimte Produkt zwecks Erreichung eines noch höheren Entkeimungsgrades, der bei 10² Keime/g Masse liegt, in einen zweiten nachgeschalteten Sterilisator 5 gefördert, der ebenfalls von einem Heizmantel umgeben ist und dessen Aufbau dem ersten Sterilisator gleicht.

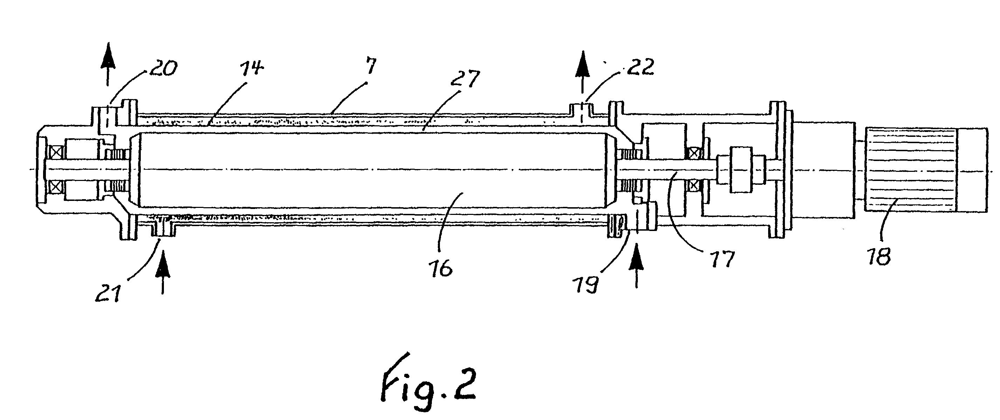

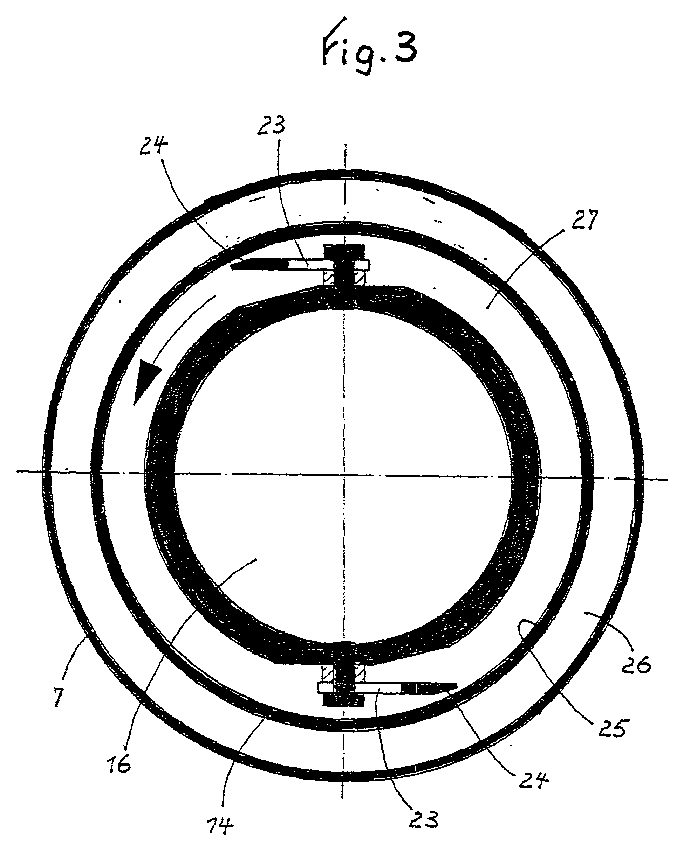

Der Aufbau der Sterilisatoren 4, 5 ergibt sich aus den Figuren 2 und 3. Jeder Sterilisator besteht aus einem zylindrischen Gehäuse 14, in dem mit Abstand zur Gehäuseinnenwand ein zylindrischer Rotor 16 drehbar gelagert ist, der über eine Welle 17 von einem Getriebemotor 18 mit einer Drehzahl von etwa 54 upm angetrieben wird. Die äußere Oberfläche des als Hohlzylinder ausgebildeten Rotors 16 ist mit zwei Reihen diametral gegenüberliegender und axial hintereinander angeordneter Schaber 23 ausgestattet, deren Messerköpfe 24 von der inneren Oberfläche 25 des Gehäuses 14 einen einstellbaren Abstand aufweisen und die dazu dienen, die durch den zwischen Rotoroberfläche und Gehäuseinnenwand vom Produkteingang 19 zum Produktausgang 20 im Spalt 27 des Sterilisators 4 geförderte Kakaomasse von der Oberfläche 25 abzuschaben und zur Spaltmitte zu bewegen und dabei zu durchmischen.

Die zylindrische Wand des Gehäuses 14 ist von einem Heizmantel 7 umgeben, durch den über einen Dampfzubereiter 6 (Fig. 1) Heizdampf in den Mantelraum 26 gefördert wird, der bei 21 in den Mantelraum 26 eintritt und diesen bei 22 verläßt. Der Heizdampf, der beim Eintritt unter einem Überdruck von 0,4 bar steht, heizt die Wandung des Gehäuses 14 auf, wodurch über die Oberfläche 25 Wärme an das durch den Rotorspalt 27 geförderte Produkt, also die zu entkeimende Kakaomasse gelangt, die auf diese Weise schonend auf eine Entkeimungstemperatur zwischen 100 °C und 150 °C erwärmt wird. Die Gleichmäßigkeit der Erwärmung ist wesentlich auf die Arbeitsweise der Schaber 23 zurückzuführen, die das Produkt von der inneren Oberfläche 25 des Gehäuses 14 abnehmen und sowohl radial als auch axial weiterfördern und dabei relativ homogen durchmischen, wobei im Gehäuse 14 sowohl des Sterilisators 4 als auch des diesem nachgeschalteten Sterilisators 5, dessen Aufbau dem erstem gleicht, mit Hilfe eines Überstromventils 8 ein Druck von 3 - 4 bar aufrechterhalten wird.

Die den Produktausgang 20 des Sterilisators 5 verlassende, entkeimte Kakaomasse wird hinter dem Ventil 8 auf Normaldruck entspannt und zu einem beheizten Zwischenbehälter 9 gefördert, wobei ein Teil der in der Kakaomasse vorhandenen Feuchtigkeit abdampft und zusammen mit den in der Sterilisatorseinrichtung gebildeten Dampfblasen zum Abscheider 28 gelangt und von dort über den Kondensator 29 als Abluft die Anlage verläßt.

Das im Zwischengefäß 9 befindliche in dieser Weise vorbehandelte Produkt wird mit Zahnradpumpen in den sich anschließenden Dünnschichtreaktor 10, also eine Behandlungssäule, gefördert, in der eine weitere thermische sowie mechanische Behandlung in Form einer Entfeuchtung und Entgasung, letztere durch Einleitung von Scherkräften in die Masse, stattfindet, bevor diese den Reaktor über eine geeignete Kühlvorrichtung 30 in einen Zwischenbehälter 11 verläßt Im Reaktor 10 wird die Kakaomasse in einem dünnen Massefilm von 1 - 2 mm auf der Gehäusewand ausgebreitet und mit zugeführter Heißluft beaufschlagt, welche in der elektrisch oder dampfbeheizten Lufterhitzungsanlage 12 aufbereitet wird, bevor sie in den Kopf 31 der Behandlungssäule eintritt. Die Abluft verläßt den Dünnschichtreaktor 10 bei 32 über den Kondensatabscheider 28, 29.

## Patentansprüche

1. Verfahren zur kontinuierlichen Veredelung insbesondere von Kakaomassen, bei dem die zu behandelnde Masse in einem Mischer mit einer im Vergleich zur Durchsatzmenge der Masse geringen Wassermenge beaufschlagt, danach entkeimt, entsäuert, wenigstens teilweise entfeuchtet und wenigstens in einem Dünnschichtreaktor thermisch behandelt und entgast wird, **dadurch gekennzeichnet,** daß die Entkeimungstemperatur in der Kakaomasse ausschließlich durch Wärmezufuhr von Außen über die Wände der die Masse aufnehmenden Sterilisatoreinrichtung erfolgt, wobei die Kakaomasse mittels langsam bewegter Schabelemente von der inneren Oberfläche der von außen beheizten Wandung des Sterilisatorgehäuses kontinuierlich abgelöst und im wesentlichen quer zur Gehäuselängsachse langsam durchmischt wird und nach dem Austreten aus dem Gehäuse entspannt und danach zur Dünnschichtveredelung gefördert wird.

2. Verfahren nach Anspruch 1, **dadurch gekennzeichnet,** daß die sich an die Entkeimung anschließende Dünnschichtveredelung der Kakaomasse in einem einzigen Dünnschichtreaktor erfolgt, in dem unter Heißluftzufuhr eine Entfeuchtung und Entgasung der Kakaomasse stattfindet.

3. Verfahren nach Anspruch 1 oder 2, **dadurch gekennzeichnet,** daß die Entkeimung in mehreren hintereinander geschalteten Sterilisatoren erfolgt.

4. Verfahren nach einem der Ansprüche 1 - 3, **dadurch gekennzeichnet,** daß die Entkeimung unter einem Druck von 3 - 4 bar und einer Temperatur zwischen 100 und 150 °C stattfindet bei einer Verweilzeit von 1 bis 5 Minuten in Abhängigkeit vom Kakaomassendurchsatz

5. Verfahren nach einem der Ansprüche 1 - 4, **dadurch gekennzeichnet,** daß das Abschaben der Kakaomasse von der Gehäusewandung der Sterilisatoreinrichtung sowie das Durchmischen der Masse in einem Spalt zwischen der Gehäusewandung der Sterilisatoreinrichtung und einem Gehäuserotor im wesentlichen in Querrichtung zur Gehäuselängsachse so langsam erfolgen, daß in der Kakaomasse im wesentlichen keine Temperaturerhöhung durch innere Reibung stattfindet.

## Claims

1. Process for the continuous refining of especially cacao masses, according to which the mass to be treated is provided within a mixing device with a quantity of water which is small in comparison with the throughput quantity of the cacao mass, wherein said mass is thereafter sterilized, deacidulated, at least partly desiccated and at least thermally treated and degassed in at least one thin layer reactor, **characterized in that** the sterilization temperature within the cacao mass is exclusively gained by adding heat from outside over the walls of the sterilization apparatus containing the mass and that the cacao mass is continuously separated from the wall of the housing of the sterilization apparatus heated from outside by slowly moving scraping elements from the inner surface of the outward heated wall of said housing and that the such treated cacao mass is moved essentially across the longitudinal axis of said housingand slowly mixed and is thereafter leaving the housing released and is thereafter fed for refining it within a thin layer.

2. Process according to claim 1, **characterized in that** the refining of the cacao mass within a thin layer following the sterilization step takes place in only one thin layer reactor using entering heated air for desiccating and degassing the cacao mass.

3. Process according to claim 1 or 2, **characterized in that** the sterilization takes place in several sterilization apparatus arranged behind one another.

4. Process according to one of the claims 1 - 3, **characterized in that** the sterilization takes place under a pressure of 3- 4 bar and a temperature of between 100 and 150 °C and in a treating time of 1 to 5 minutes dependent on the quantity of the cacao mass throughput.

5. Process according to one of the claims 1 - 4, **characterized in that** the scraping of the cacao mass off the housing wall of the sterilization apparatus as well as the mixing of the mass within a gap between the housing wall of the sterilization device and a housing rotor takes place essentially across the longitudinal axis of the housing so slowly that within the cacao mass essentially no temperature rise is caused by friction inside the mass.

## Revendications

1. Procédé de transformation en continu, en particulier de pâtes de cacao, dans lequel la pâte à traiter reçoit, dans un mélangeur, une quantité d'eau faible par rapport à la quantité de pâte traitée, puis est stérilisée, désacidifiée, au moins en partie déshydratée et au moins traitée thermiquement dans un réacteur à couche mince, puis dégazée, caractérisé en ce que la température de stérilisation dans la pâte de cacao s'obtient exclusivement par apport de chaleur de l'extérieur, à travers les parois du dispositif de stérilisation qui contient la pâte, la pâte de cacao étant détachée en continu, au moyen d'éléments de raclage déplacés lentement, de la surface intérieure de la paroi, chauffée de l'extérieur, du carter du stérilisateur, et étant brassée lentement, sensiblement transversalement à l'axe longitudinal du carter, et étant détendue après la sortie du carter, puis transportée vers la transformation à couche mince.

2. Procédé selon la revendication 1, caractérisé en ce que la transformation à couche mince de la pâte de cacao, qui fait suite à la stérilisation, s'effectue dans un seul réacteur à couche mince, dans lequel ont lieu une déshydratation et un dégazage de la pâte de cacao, par apport d'air chaud.

3. Procédé selon la revendication 1 ou 2, caractérisé en ce que la stérilisation s'effectue dans plusieurs stérilisateurs montés les uns derrière les autres.

4. Procédé selon l'une des revendications 1 à 3, caractérisé en ce que la stérilisation a lieu sous une pression de 3 à 4 bars et une température comprise entre 100 et 150 °C, avec un durée de séjour de 1 à 5 minutes, suivant le débit de la pâte de cacao.

5. Procédé selon l'une des revendications 1 à 4, caractérisé en ce que le raclage de la pâte de cacao de la paroi du carter du dispositif de stérilisation, ainsi que le brassage de la pâte, s'effectuent dans un Interstice compris entre la paroi du carter du dispositif de stérilisation et un rotor du carter, dans une direction sensiblement transversale à l'axe longitudinal du carter, suffisamment lentement pour que dans la pâte de cacao il ne se produise sensiblement aucune augmentation de température due à une friction intérieure.
